(19) Europäisches Patentamt
European Patent Office
Office européen des brevets

(11) EP 4 116 342 A1

(12) EUROPEAN PATENT APPLICATION
published in accordance with Art. 153(4) EPC

(43) Date of publication:
**11.01.2023 Bulletin 2023/02**

(21) Application number: **21764613.2**

(22) Date of filing: **05.03.2021**

(51) International Patent Classification (IPC):
***C08F 220/22*** *(2006.01)* ***C08K 5/02*** *(2006.01)*
***C08L 27/04*** *(2006.01)* ***C08L 33/04*** *(2006.01)*
***C08L 33/16*** *(2006.01)* ***D06M 15/277*** *(2006.01)*

(52) Cooperative Patent Classification (CPC):
**C08F 220/22; C08K 5/02; C08L 27/04; C08L 33/04; C08L 33/16; D06M 15/277**

(86) International application number:
**PCT/JP2021/008794**

(87) International publication number:
**WO 2021/177459 (10.09.2021 Gazette 2021/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.03.2020 JP 2020039222**

(71) Applicant: **Daikin Industries, Ltd.**
**Osaka-shi, Osaka 530-8323 (JP)**

(72) Inventors:
- **YAMAMOTO, Ikuo**
  **Osaka-shi, Osaka 530-8323 (JP)**
- **MIYAHARA, Masahiro**
  **Osaka-shi, Osaka 530-8323 (JP)**
- **MINAMI, Shinichi**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) DISPERSION

(57) Provided is a dispersion having both product stability and water repellency and/or oil repellency, and comprising a fluorine-containing polymer and a liquid medium, wherein: the fluorine-containing polymer has a Q value of at least 2.0 and contains a repeating unit derived from a fluorine-containing monomer (a) containing a fluoroalkyl group, and a repeating unit derived from a chloride monomer (b), which is at least one selected from among vinyl chloride and vinylidene chloride; and the concentration of the unreacted chloride monomer (b) is at most 2.0 ppm.

EP 4 116 342 A1

## Description

Technical Field

The present disclosure relates to a dispersion.

Background Art

There is known a water- and oil-repellent agent that is less problematic in terms of change in the form and performance deterioration thereof and is thus excellent in storage stability. The water- and oil-repellent agent is provided by using a water-dispersible water- and oil-repellent agent including a copolymer obtained by copolymerizing a polyfluoroalkyl group-containing monomer, vinyl chloride or vinylidene chloride, and other copolymerizable monomers, and having a concentration of the unreacted vinyl chloride monomer or vinylidene chloride monomer of 10 ppm or less provided (Patent Literature 1).

Prior Art Literature

Patent Literature

Patent Literature 1: JP H4-80218 A

Summary of Invention

Technical Problem

However, when using a fluorine-containing polymer other than the fluorine-containing polymer as described in Patent Literature 1, a product stability and a water-repellency and/or an oil-repellency are not sufficient. An object of the present disclosure is to provide a novel dispersion that enables both the product stability and the water-repellency and/or oil-repellency.

Solution to Problem

Embodiments according to the present disclosure is as follows:

[Item 1]

A dispersion comprising a fluorine-containing polymer and a liquid medium, wherein

the fluorine-containing polymer comprises
a repeating unit derived from a fluorine-containing monomer (a) having a Q value of 2.0 or more and comprising a fluoroalkyl group, and
a repeating unit derived from a chloride monomer (b) that is at least one selected from vinyl chloride and vinylidene chloride, and
the dispersion has a concentration of the unreacted chloride monomer (b) of 2.0 ppm or less.

[Item 2]

The dispersion according to item 1, wherein
the fluorine-containing monomer (a) is a compound represented by a formula:

$$CH_2=C(-X)-C(=O)-Y-Z-Rf$$

wherein X is a halogen atom;

Y is -O- or -NH-;
Z is a direct bond or a divalent organic group; and
Rf is a fluoroalkyl group having 1 to 20 carbon atoms.

[Item 3]

The dispersion according to item 2, wherein X is a chlorine atom.

[Item 4]

The dispersion according to item 2 or 3, wherein Rf is a perfluoroalkyl group having 3 to 6 carbon atoms.

[Item 5]

The dispersion according to any one of items 1 to 4, wherein an amount of the repeating unit derived from the chloride monomer (b) is less than 25% by weight relative to the fluorine-containing polymer.

[Item 6]

The dispersion according to any one of items 1 to 5, wherein the fluorine-containing polymer further comprises a repeating unit derived from a hydrocarbon group-containing monomer (c) represented by a formula:

$$CH_2=CA^{21}\text{-}C\ (=O)\ \text{-}O\text{-}A^{22}$$

wherein $A^{21}$ is a hydrogen atom, a monovalent organic group, or a halogen atom, and $A^{22}$ is a hydrocarbon group having 2 to 40 carbon atoms.

[Item 7]

The dispersion according to item 6, wherein the fluorine-containing polymer comprises
a repeating unit derived from a long-chain hydrocarbon group-containing monomer (c1) in which $A^{22}$ is an acyclic aliphatic hydrocarbon group having 12 to 30 carbon atoms.

[Item 8]

The dispersion according to item 6 or 7, wherein a total amount of the repeating unit derived from the fluorine-containing monomer (a), the repeating unit derived from the chloride monomer (b), and the repeating unit derived from the hydrocarbon group-containing monomer (c) is 90% by weight or more relative to the fluorine-containing polymer.

[Item 9]

The dispersion according to any one of items 1 to 8, wherein the fluorine-containing polymer further comprises a repeating unit derived from a crosslinkable monomer (d) having at least two selected from the group consisting of a reactive group and an olefinic carbon-carbon double bond.

[Item 10]

The dispersion according to item 9, wherein an amount of the repeating unit derived from the fluorine-containing monomer (a) is 25% by weight or more relative to the fluorine-containing polymer, and an amount of the repeating unit derived from the crosslinkable monomer (d) is 10% by weight or less relative to the fluorine-containing polymer.

[Item 11]

The dispersion according to any one of items 1 to 10, wherein the concentration of the unreacted chloride monomer (b) is 1.0 ppm or less.

[Item 12]

The dispersion according to any one of items 1 to 11, wherein the liquid medium comprises at least 30% by weight or more of water.

[Item 13]

A method for producing a dispersion, comprising:

(i) copolymerizing a fluorine-containing monomer (a) comprising a fluoroalkyl group and having a Q value of 2.0 or more in a Q-e scheme, and a chloride monomer (b) that is at least one selected from vinyl chloride and vinylidene chloride in a liquid medium to obtain a polymerization solution comprising a fluorine-containing polymer, and
(ii) reducing a concentration of the unreacted chloride monomer (b) in the polymerization solution obtained to 2.0 ppm or less.

[Item 14]

A method for producing a treated object, comprising applying the dispersion according to any of items 1 to 12 to a substrate.

Effects of Invention

The dispersion in the present disclosure has an excellent product stability and water- and oil-repellency.

Description of Embodiments

<Dispersion>

The dispersion (particularly water dispersion) includes

a fluorine-containing polymer and
a liquid medium.

The dispersion may further include

a surfactant and/or
a curing agent.

The dispersion may include other components.

[Fluorine-containing polymer]

The fluorine-containing polymer includes

a repeating unit derived from a fluorine-containing monomer (a) and
a repeating unit derived from a chloride monomer (b). The fluorine-containing polymer may further include
a hydrocarbon group-containing monomer (c), and/or
a crosslinkable monomer (d).

The fluorine-containing polymer may include another monomer (e).

(Fluorine-containing monomer (a))

The fluorine-containing polymer includes
a repeating unit derived from a fluorine-containing monomer (a) having a Q value of 2.0 or more and including a fluoroalkyl group.
The Q value of fluorine-containing monomer (a) may be 2.0 or more, 2.2 or more, 2.4 or more, 2.6 or more, or 2.8 or more, and is preferably 2.6 or more or 2.8 or more. The Q value of fluorine-containing monomer (a) may be 10.0 or less, 8.0 or less, 6.0 or less, 4.0 or less, 3.5 or less, or 3.0 or less, and is preferably 3.5 or less or 3.0 or less.
The e value of fluorine-containing monomer (a) may be 0.6 or more, 0.8 or more, 0.9 or more, or 1.0 or more, and is preferably 0.9 or more or 1.0 or more. The e value of fluorine-containing monomer (a) may be 1.5 or less, 1.4 or less, 1.3 or less, 1.2 or less, or 1.1 or less, and is preferably 1.3 or less, 1.2 or less, or 1.1 or less.
Herein, the Q value is an index representing a degree of the resonance stabilization effect between a double

bond of a radical polymerizable monomer and a substituent thereof. The e value of the monomer is an index representing a degree of polarity of a double bond of the radical polymerizable monomer. Styrene is used as a standard (Q value = 1.0, e value = -0.8), and Q and e values of various monomers have been empirically determined. The Q and e values of representative monomers are described in J. Brandrup, E. H. Immergut, and E. A. Grulke, "Polymer Handbook, 3rd Issue (Polymer Handbook Fourth Edition)" (John Wiley & Sons Inc., 1998), etc. Reference to the values therein may be made, or the Q and e values may be calculated according to the "Calculation method of Q-e value" below.

Calculation method of Q-e value

1) Calculation of monomer reactivity ratio

Generally, reactivity ratios ($r_1$, $r_2$) of monomers to estimate the compositional feature of a copolymer are obtained by obtaining the Mayo-Lewis[1)] equation [1] below and then linearizing the equation into the equation [2] by the Fineman-Ross method[2)]. When two types of monomers are copolymerized, the copolymerization reaction can be expressed in the following reaction scheme:

$$\begin{aligned} &\sim M_1\cdot + M_1 \rightarrow \sim M_1M_1\cdot \\ &\sim M_1\cdot + M_2 \rightarrow \sim M_1M_2\cdot \\ &\sim M_2\cdot + M_2 \rightarrow \sim M_2M_2\cdot \\ &\sim M_2\cdot + M_1 \rightarrow \sim M_2M_1\cdot \end{aligned} \qquad r_1 = \frac{k_{11}}{k_{12}} \qquad r_2 = \frac{k_{22}}{k_{21}}$$

where M1 and M2 each represent a monomer, ~M1● and ~M2● each represent a radical, and $k_{11}$, $k_{12}$, $k_{22}$, and $k_{21}$ represent reaction rate constants of the four propagation reactions, respectively.

Given that the amounts of each monomer fed is designated as [M1] and [M2] and the amounts of disappearance for each monomer as d[M1] and d[M2], the following equation is obtained.

$$\frac{d[M_1]}{d[M_2]} = \frac{[M_1]}{[M_2]} \times \frac{r_1[M_1]+[M_2]}{r_2[M_2]+[M_1]} \qquad [1]$$

When defining the following, in Equation [1],

$$\frac{[M_1]}{[M_2]} = F \quad \text{、} \quad \frac{d[M_1]}{d[M_2]} = f$$

transforming it to a Fineman-Ross equation gives Equation [2] :

$$\frac{F}{f}(f-1) = r_1\frac{F^2}{f} - r_2 \qquad [2]$$

The values of $r_1$ and $r_2$ can be determined from a graph obtained by plotting F{(f-1)/f} against {F(2/f)} followed by linear approximation. The nonlinear least squares method[3)] can also be applied so that the sum of $\Delta f^2$ becomes a minimum value, and combination of $r_1$ and $r_2$ can be calculated using a solver function of a software.

2) Calculation of Q-e value[4)]

The reactivity ratios ($r_1$, $r_2$) of monomers in a radical copolymerization depend on the structures of the monomers and are said not to be influenced by a temperature, pressure, solvent or the like. In general, a structural effect of a monomer on a relative rate of propagation reaction can be expressed by resonance and polarity effects when a steric effect is negligible. Alfrrey and Price assumed that the reaction rate constant $k_{12}$ of the propagation reaction in radical copolymerization shown in Equation [3] was expressed in Equation [4][5)].

$$M_1 \cdot + M_2 \rightarrow M2 \cdot \qquad [3]$$

$$k_{12} = P_1 Q_2 \exp\{-e_1 e_2\} \qquad [4]$$

where $P_1$ represents the general reactivity of $M_1$●, $Q_2$ represents the resonance stabilization effect of monomer $M_2$, and $e_1$ and $e_2$ represent the polarity effects of $M_1$ and $M_2$, respectively. Substituting Equation [4] into the monomer reactivity ratios of radical copolymerization, $r_1=k_{11}/k_{12}$ and $r_2=k_{22}/k_{21}$, yields Equations [5] and [6], respectively.

$$r_1 = \frac{k_{11}}{k_{12}} = \frac{Q_1}{Q_2} \exp\{-e_1(e_1 - e_2)\} \quad [5]$$

$$r_2 = \frac{k_{22}}{k_{21}} = \frac{Q_2}{Q_1} \exp\{-e_2(e_2 - e_1)\} \quad [6]$$

The Q value of styrene as the standard monome is defined as 1.0 and the e value thereof is defined as -0.8. The e-values of the monomer and the radical thereof are assumed to be equal. By substituting the monomer reactivity ratios ($r_1$, $r_2$) calculated from copolymerization of styrene and various fluorine-containing monomers into Equations [5] and [6], Q and e values of fluorine-containing monomer (a) can be calculated.

Reference literature:

1) F. R. Mayo, F. M. Lewis, J. Am. Chem. Soc., 1944, 66, 1594.
2) M. Fineman and S. D. Ross, J. Polym. Sci., 1950, 5, 259.
3) P. W. Tidwell, G. A. Mortimer, J. Polymer. Sci., 1965, A3, 369.
4) T. Otsu, in Progress in Polymer Science Japan, ed. by M. Imoto, S. Onogi, Kodansha Ltd., Tokyo, 1970, Vol.1, PP.4
5) T. Alfrey Jr., C. C. Price, J. Polym. Sci., 1947, 2. 101.

Fluorine-containing monomer (a) is a fluorine-containing monomer including a fluoroalkyl group. Fluorine-containing monomer (a) is generally a polymerizable compound having a perfluoroalkyl group or a perfluoroalkenyl group and a (meth)acryloyl group or an α-substituted acryloyl group. Herein, when simply reciting "acrylic," it encompasses not only a compound in which the α-position is a hydrogen atom, but also a compound in which the α-position is substituted with another group (for example, a monovalent organic group including a methyl group or a halogen atom), unless otherwise explicitly noticed. "(Meth)acryloyl" used herein means acryloyl or methacryloyl, "(meth)acrylate" means acrylate or methacrylate, and "(meth)acrylamide" means acrylamide or methacrylamide.

Fluorine-containing monomer (a) preferably has a halogen atom at the α-position and is preferably a compound represented by the formula:

$CH_2$=C(-X)-C(=O)-Y-Z-Rf

wherein X is a halogen atom;

Y is -O- or -NH-;
Z is a direct bond or a divalent organic group; and
Rf is a fluoroalkyl group having 1 to 20 carbon atoms.

X is preferably a fluorine atom, chlorine atom, bromine atom or iodine atom, more preferably a chlorine atom.

Y is preferably -O-.

Z may be a direct bond, an aliphatic group having 1 to 10 carbon atoms, an aromatic or cycloaliphatic group having 6 to 18 carbon atoms, a group represented by the formula $-R^2(R^1)N-SO_2-$ or $-R^2(R^1)N-CO-$ wherein $R^1$ is an alkyl group having 1 to 10 carbon atoms and $R^2$ is a linear or branched alkylene group having 1 to 10 carbon atoms, a group represented by the formula $-CH_2CH\ (OR^3)\ CH_2-\ (Ar-O)_p-$wherein $R^3$ is a hydrogen atom or an acyl group having 1 to 10 carbon atoms (for example, a formyl or acetyl group), Ar is an arylene group optionally having a substituent, and p

represents 0 or 1, a group represented by the formula $-(CH_2)_r-Ar-(O)_q-$ wherein Ar is an arylene group optionally having a substituent, q is 0 or 1, and r is 0 to 10, or a group represented by the formula $-(CH_2)_m-SO_2-(CH_2)_n-$ or $-(CH_2)_m-S-(CH_2)_n-$ wherein m is 1 to 10 and n is 0 to 10. The aliphatic group is preferably an alkylene group (in particular, the group having 1 to 4 carbon atoms, for example, 1 or 2 carbon atoms). The aromatic group or cycloaliphatic group may be substituted or unsubstituted. The S group or $SO_2$ group may be bonded directly to the Rf group.

Rf is preferably a perfluoroalkyl group. The number of carbon atoms of Rf may be 1 to 12, 1 to 8, 1 to 6, 3 to 6, 4 to 6, or 6, and is preferably 3 to 6, more preferably 4 to 6, and particularly preferably 6. Examples of the Rf group include $-CF_3$, $-CF_2CF_3$, $-CF_2CF_2CF_3$, $-CF(CF_3)_2$, $-CF_2CF_2CF_2CF_3$, $-CF_2CF(CF_3)_2$, $-C(CF_3)_3$, $-(CF_2)_4CF_3$, $-(CF_2)_2CF(CF_3)_2$, $-CF_2C(CF_3)_3$, $-CF(CF_3)CF_2CF_2CF_3$, $-(CF_2)_5CF_3$, $-(CF_2)_3CF(CF_3)_2$, $-(CF_2)_4CF(CF_3)_2$, and $-C_8F_{17}$.

Specific examples of monomer (a) include the following, but are not limited to. These may be used singly or in combination of two or more thereof.

$CH_2=C(-Cl)-C(=O)-O-(CH_2)_2-Rf$

$CH_2=C(-Cl)-C(=O)-O-(CH_2)_2-S-Rf$

$CH_2=C(-Cl)-C(=O)-O-(CH_2)_2-S-(CH_2)_2-Rf$

$CH_2=C(-Cl)-C(=O)-O-(CH_2)_2-SO_2-Rf$

$CH_2=C(-Cl)-C(=O)-O-(CH_2)_2-SO_2-(CH_2)_2-Rf$

$CH_2=C(-Cl)-C(=O)-NH-(CH_2)_2-Rf$

where Rf is a fluoroalkyl group having 1 to 20 carbon atoms.

Monomer (a) is particularly preferably

$CH_2=C(-Cl)-C(=O)-O-(CH_2)_2-Rf$.

(Chloride monomer (b))

The fluorine-containing polymer includes a repeating unit derived from chloride monomer (b) that is at least one selected from vinyl chloride and vinylidene chloride. Chloride monomer (b) is preferably vinyl chloride.

(Hydrocarbon group-containing monomer (c))

The fluorine-containing polymer may have a repeating unit derived from a hydrocarbon group-containing monomer (c) represented by the formula:

$$CH_2=CA^{21}-C(=O)-O-A^{22} \qquad (c)$$

wherein $A^{21}$ is a hydrogen atom, a monovalent organic group, or a halogen atom, and $A^{22}$ is a hydrocarbon group having 2 to 40 carbon atoms. $A^{21}$ is preferably a hydrogen atom, a methyl group or a chlorine atom. $A^{22}$ (hydrocarbon group) may be an acyclic aliphatic hydrocarbon group having 1 to 30 carbon atoms, a cyclic hydrocarbon-containing group having 4 to 30 carbon atoms, etc. The number of carbon atoms of the acyclic aliphatic hydrocarbon group is preferably 12 to 30 and more preferably 18 to 25. Specific examples of the acyclic aliphatic hydrocarbon group include lauryl, cetyl, stearyl, and behenyl. Specific examples of the cyclic hydrocarbon group include a cyclohexyl group, a t-butylcyclohexyl group, an isobornyl group, a dicyclopentanyl group, a dicyclopentenyl group, and an adamantyl group. Examples of the chain or cyclic hydrocarbon group having 1 to 30 carbon atoms are a linear or branched and saturated or unsaturated (for example, ethylenically unsaturated) aliphatic hydrocarbon group having 1 to 30 carbon atoms, a saturated or unsaturated (for example, ethylenically unsaturated) cycloaliphatic group having 4 to 30 carbon atoms, an aromatic hydrocarbon group having 6 to 30 carbon atoms, and an aromatic-aliphatic hydrocarbon group having 7 to 30 carbon atoms.

Hydrocarbon group-containing monomer (c) has no polyfluoroalkyl group. Crosslinkable monomer (d) may not have a fluorine atom.

Mention can be made of arylate ester monomers having cyclic hydrocarbon-containing groups, such as cyclohexyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, and 2-ethyl-2-adamantyl (meth) acrylate. These may be used singly or in combination of two or more thereof.

(Long-chain hydrocarbon group-containing monomer (c1))

The fluorine-containing polymer preferably includes a repeating unit derived from a long-chain hydrocarbon group-containing monomer (c1) in which $A^{22}$ in formula (c) is an acyclic aliphatic hydrocarbon group having 12 to 30 carbon atoms. The acyclic aliphatic hydrocarbon group having 12 to 30 carbon atoms may be linear or a branched chain and is preferably linear.

Specific examples of the long-chain hydrocarbon group-containing monomer (c1) include acrylate ester monomers having acyclic aliphatic hydrocarbon groups, such as lauryl (meth)acrylate, cetyl (meth)acrylate, stearyl (meth)acrylate, and behenyl (meth)acrylate. These may be used singly or in combination of two or more thereof.

(Cyclic hydrocarbon group-containing monomer (c2))

A repeating unit derived from cyclic hydrocarbon group-containing monomer (c2) in which $A^{22}$ in formula (c) is a cyclic hydrocarbon group is preferably included. Specific examples of cyclic hydrocarbon group include a cyclohexyl group-containing group, a t-butylcyclohexyl group-containing group, an isobornyl group-containing group, a dicyclopentanyl group-containing group, a dicyclopentenyl group-containing group, and an adamantyl group-containing group.

Specific examples of cyclic hydrocarbon group-containing monomer (c2) include cyclohexyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, and 2-ethyl-2-adamantyl (meth)acrylate. These may be used singly or in combination of two or more thereof.

(Crosslinkable monomer (d))

The fluorine-containing polymer may have a repeating unit derived from a crosslinkable monomer (d) having at least two selected from the group consisting of a reactive group and an olefinic carbon-carbon double bond. Crosslinkable monomer (d) may be a compound having at least two ethylenically unsaturated double bonds, or a compound having at least one ethylenically unsaturated double bond and at least one reactive group. Crosslinkable monomer (d) preferably has a (meth)acrylate or (meth)acrylamide group. Examples of the reactive group include a hydroxyl group, an epoxy group, a chloromethyl group, a blocked isocyanate group, an amino group, and a carboxyl group.

Crosslinkable monomer (d) has no polyfluoroalkyl group. Crosslinkable monomer (d) may not have a fluorine atom.

Crosslinkable monomer (d) may be compound represented by the formula:

$$CH_2=CE^1-C(=O)-E^2-E^3-E^4$$

wherein $E^1$ is a hydrogen atom, a methyl group, or a halogen atom (for example, a chlorine atom, a bromine atom, and an iodine atom),

$E^2$ is -O- or -NH-,

$E^3$ is an organic group having 1 to 20 carbon atoms, for example, a linear or branched aliphatic group (in particular, an alkylene group) having 1 to 20 carbon atoms, for example, a group represented by the formula: $-(CH_2)_x-$wherein x is 1 to 10, and

$E^4$ is a hydroxyl group, an epoxy group, a chloromethyl group, a blocked isocyanate group, an amino group, or a carboxyl group.

Specific examples of the crosslinkable monomer include diacetone (meth)acrylamide, N-methylol (meth)acrylamide, hydroxyethyl (meth)acrylamide, glycidyl (meth)acrylate, hydroxymethyl (meth)acrylate, hydroxyethyl (meth)acrylate, 2,3-dihydroxypropyl (meth)acrylate, 3-chloro-2-hydroxypropyl (meth)acrylate, 2-acetoacetoxyethyl (meth)acrylate, butadiene, isoprene, chloroprene, vinyl monochloroacetate, vinyl methacrylate, glycidyl (meth)acrylate 1,4-butanediol di(meth)acrylate, 1,6-hexanediol di(meth)acrylate, 1,9-nonanediol di(meth)acrylate, and neopentyl glycol di(meth)acrylate. These may be used singly or in combination of two or more thereof.

(Other monomer (e))

The fluorine-containing polymer may include a repeating unit derived from other monomer (e) than monomers (a) to (d).

Specific examples of other monomer (b3) include ethylene, vinyl acetate, acrylonitrile, styrene, polyethylene glycol (meth)acrylate, polypropylene glycol (meth)acrylate, methoxy polyethylene glycol (meth)acrylate, methoxy polypropylene glycol (meth)acrylate, and vinyl alkyl ether. Other fluorine-free monomers are not limited to these examples. These may be used singly or in combination of two or more thereof.

(Compositional feature of Polymer)

The amount of the repeating unit derived from fluorine-containing monomer (a) may be 15% by weight or more, 25% by weight or more, 35% by weight or more, or 45% by weight or more, relative to the fluorine-containing polymer. The amount of the repeating unit derived from fluorine-containing monomer (a) may be 90% by weight or less, 80% by weight or less, 70% by weight or less, or 60% by weight or less, relative to the fluorine-containing polymer.

The amount of the repeating unit derived from chloride monomer (b) may be 5% by weight or more, 10% by weight or more, 15% by weight or more, 20% by weight or more, or 25% by weight or more, relative to the fluorine-containing polymer. The amount of the repeating unit derived from chloride monomer (b) may be 45% by weight or less, 40% by weight or less, 30% by weight or less, 25% by weight or less, or 22% by weight or less, and is preferably 25% by weight or less, relative to the fluorine-containing polymer.

The amount of the repeating unit derived from hydrocarbon group-containing monomer (c) may be 5% by weight or more, 10% by weight or more, 15% by weight or more, or 20% by weight or more, relative to the fluorine-containing polymer. The amount of the repeating unit derived from hydrocarbon group-containing monomer (c) may be 45% by weight or less, 40% by weight or less, 30% by weight or less, 25% by weight or less, or 22% by weight or less, relative to the fluorine-containing polymer.

The amount of the repeating unit derived from long-chain hydrocarbon group-containing monomer (c1) may be 5% by weight or more, 10% by weight or more, 15% by weight or more, or 20% by weight or more, relative to the fluorine-containing polymer. The amount of the repeating unit derived from long-chain hydrocarbon group-containing monomer (c1) may be 45% by weight or less, 40% by weight or less, 30% by weight or less, 25% by weight or less, or 22% by weight or less, relative to the fluorine-containing polymer.

The amount of the repeating unit derived from crosslinkable monomer (d) may be 0.5% by weight or more, 1% by weight or more, 3% by weight or more, or 4% by weight or more, relative to the fluorine-containing polymer. The amount of the repeating unit derived from crosslinkable monomer (d) may be 15% by weight or less, 10% by weight or less, 7.5% by weight or less, or 5% by weight or less, relative to the fluorine-containing polymer.

The amount of the repeating unit derived from other monomer (e) may be 0.5% by weight or more, 1% by weight or more, 3% by weight or more, or 4% by weight or more, relative to the fluorine-containing polymer. The amount of the repeating unit derived from other monomer (e) may be 15% by weight or less, 10% by weight or less, or 5% by weight or less, relative to the fluorine-containing polymer.

The amount of the repeating unit derived from chloride monomer (b) may be 5 to 500 parts by weight, 10 to 200 parts by weight, 10 to 150 parts by weight, 15 to 200 parts by weight, or 20 to 150 parts by weight, 10 to 50 parts by weight, relative to 100 parts by weight of the repeating unit derived from fluorine-containing monomer (a).

The amount of repeating unit derived from hydrocarbon group-containing monomer (c) may be 5 to 500 parts by weight, 10 to 200 parts by weight, 10 to 150 parts by weight, 15 to 200 parts by weight, or 20 to 150 parts by weight, relative to 100 parts by weight of the repeating unit derived from fluorine-containing monomer (a).

The amount of repeating unit derived from long-chain hydrocarbon group-containing monomer (c1) may be 5 to 500 parts by weight, 10 to 200 parts by weight, 10 to 150 parts by weight, 15 to 200 parts by weight, or 20 to 150 parts by weight, relative to 100 parts by weight of the repeating unit derived from fluorine-containing monomer (a).

The amount of the repeating unit derived from cyclic hydrocarbon group-containing monomer (c2) may be 5 to 500 parts by weight, 10 to 200 parts by weight, 10 to 150 parts by weight, 15 to 200 parts by weight, or 20 to 150 parts by weight, relative to 100 parts by weight of the repeating unit derived from fluorine-containing monomer (a).

The amount of the repeating unit derived from crosslinkable monomer (d) may be 1 to 50 parts by weight, 3 to 40 parts by weight, 3 to 30 parts by weight, 5 to 25 parts by weight, or 5 to 20 parts by weight, relative to 100 parts by weight of the repeating unit derived from fluorine-containing monomer (a).

The amount of the repeating unit derived from other monomer (e) may be 1 to 50 parts by weight, 3 to 40 parts by weight, 3 to 30 parts by weight, 5 to 25 parts by weight, or 5 to 20 parts by weight, relative to 100 parts by weight of the repeating unit derived from fluorine-containing monomer (a).

The total amount of the repeating unit derived from fluorine-containing monomer (a), the repeating unit derived from chloride monomer (b), and the repeating unit derived from hydrocarbon group-containing monomer (c) may be

85% by weight or more, 90% by weight or more, or 95% by weight or more, relative to the fluorine-containing polymer.

The total amount of the repeating unit derived from fluorine-containing monomer (a), the repeating unit derived from chloride monomer (b), the repeating unit derived from hydrocarbon group-containing monomer (c), and the repeating unit derived from crosslinkable monomer (d) may be 85% by weight or more, 90% by weight or more, or 95% by weight or more, relative to the fluorine-containing polymer.

[Unreacted chloride monomer (b)]

The unreacted chloride monomer (b) means at least one selected from vinyl chloride and vinylidene chloride.

[Liquid medium]

The dispersion includes a liquid medium. The liquid medium may be an aqueous medium. The liquid medium may be water alone, an organic solvent alone, or a mixture of water and (water-miscible) organic solvent. The amount of water may be 30% by weight or more, 50% by weight or more, or 80% by weight or more, relative to the liquid medium. The amount of the organic solvent may be 30% by weight or less, for example, 10% by weight or less (preferably 0.1% by weight or more), relative to the liquid medium.

The liquid medium may be added after production of the fluorine-containing polymer by polymerization. For example, after polymerizing a monomer in the presence of an organic solvent to produce a fluorine-containing polymer, water is added and then the organic solvent is distilled off. The organic solvent may not be distilled off.

[Surfactant]

The dispersion may include a surfactant in the case of an aqueous dispersion. The surfactant includes at least one of a nonionic surfactant, a cationic surfactant and an anion surfactant. The surfactant may include an amphoteric surfactant. The surfactant may not be included. The dispersion generally includes a surfactant in the case of an aqueous dispersion. The surfactant may be added before or after polymerization, or may not be added. Even in the case of no surfactant added, an aqueous dispersion in which the fluorine-containing polymer is dispersed in an aqueous medium is still obtained.

The nonionic surfactant is a nonionic surfactant having an oxyalkylene group. The number of carbon atoms of the alkylene group in the oxyalkylene group is preferably 2 to 10. Preferably the number of oxyalkylene groups in a molecule of the nonionic surfactant is generally 2 to 100. The nonionic surfactant may be an alkylene oxide adduct of a linear and/or branched aliphatic (saturated and/or unsaturated) group, a polyalkylene glycol ester of a linear and/or branched fatty acid (saturated and/or unsaturated), a polyoxyethylene (POE)/polyoxypropylene (POP) copolymer (random or block copolymer), an alkylene oxide adduct of acetylene glycol, etc. Among them, the nonionic surfactant is preferably a surfactant such that the structures of the alkylene oxide addition moiety and polyalkylene glycol moiety are polyoxyethylene (POE) or polyoxypropylene (POP) or POE/POP copolymer (which may be a random or block copolymer). Moreover, the nonionic surfactant preferably has a structure that does not include an aromatic group, in view of environmental issues (biodegradability, environmental hormones, etc.).

The cationic surfactant may be an amine salt, quaternary ammonium salt, or oxyethylene-added ammonium salt. Specific examples of the cationic surfactant include, but are not limited to, an alkyl amine salt, amine salt type surfactants such as an amino alcohol fatty acid derivative, polyamine fatty acid derivative, and imidazoline, and quaternary ammonium salt type surfactants such as an alkyl trimethylammonium salt, dialkyl dimethylammonium salt, alkyl dimethyl benzyl ammonium salt, pyridinium salt, alkyl isoquinolinium salt, and benzethonium chloride. Specific examples of the cationic surfactant include dodecyl trimethyl ammonium acetate, trimethyl tetradecyl ammonium chloride, hexadecyl trimethyl ammonium bromide, trimethyl octadecyl ammonium chloride, (dodecyl methyl benzyl) trimethylammonium chloride, benzyl dodecyldimethylammonium chloride, methyl dodecyldi(hydropolyoxyethylene) ammonium chloride, benzyl dodecyldi(hydropolyoxyethylene) ammonium chloride, and N-[2-(diethylamino)ethyl]oleamide hydrochloride.

Examples of the anionic surfactant include a fatty acid salt (the number of carbon atoms of the fatty acid is, for example, 8 to 30), sulfonate (for example, alkyl sulfonate, alkyl benzene sulfonate (the number of carbon atoms of the alkyl group is, for example, 8 to 30)), and sulfate salt (for example, alkyl sulfate salt (the number of carbon atoms of the alkyl group is, for example, 8 to 30)).

Examples of the anionic surfactant include sodium lauryl sulfate, triethanolamine lauryl sulfate, sodium polyoxyethylene lauryl ether sulfate, sodium polyoxyethylene nonylphenyl ether sulfate, triethanolamine polyoxyethylene lauryl ether sulfate, sodium cocoyl sarcosine, sodium N-cocoyl methyl taurate, sodium polyoxyethylene coconut alkyl ether sulfate, sodium diether hexyl sulfosuccinate, sodium $\alpha$-olefin sulfonate, sodium lauryl phosphate, and sodium polyoxyethylene lauryl ether phosphate.

Examples of the amphoteric surfactant includes alanines, imidazolinium betaines, amido betaines, and betaine

acetate. Specific examples include lauryl betaine, stearyl betaine, lauryl carboxymethyl hydroxyethyl imidazolinium betaine, lauryl dimethylaminoacetate betaine, and fatty acid amidopropyl dimethylamino acetate betaine.

The nonionic surfactants, cationic surfactants, anionic surfactants, and amphoteric surfactants each may be used singly or in combination of two or more thereof. The surfactant is preferably the nonionic surfactant and/or the cationic surfactant. It may be a combination of the nonionic surfactant and the cationic surfactant.

[Curing agent]

The dispersion may include a curing agent (active hydrogen-reactive compound or active hydrogen-containing compound) . The curing agent may be added to the dispersion after obtaining the fluorine-containing polymer by polymerization.

The dispersion may include the curing agent (crosslinking agent) so that the fluorine-containing polymer is favorably cured. Since the fluorine-free crosslinkable (meth)acrylate or (meth)acrylamide monomer is an active hydrogen-containing monomer or active hydrogen-reactive group-containing monomer, the fluorine-containing polymer has an active hydrogen group or active hydrogen-reactive group. The curing agent is an active hydrogen-reactive compound or an active hydrogen-containing compound so that it reacts with the active hydrogen group or active hydrogen-reactive group of the fluorine-containing polymer.

Examples of the active hydrogen-reactive compound include a polyisocyanate compound, an epoxy compound, a chloromethyl group-containing compound, a carboxyl group-containing compound, and a hydrazide compound.

Examples of the active hydrogen-containing compound include a hydroxyl group-containing compound, an amino group-containing compound and a carboxyl group-containing compound, a ketone group-containing compound, a hydrazide compound, and a melamine compound.

The curing agent is preferably a polyisocyanate compound.

The polyisocyanate compound is a compound having two or more isocyanate groups in one molecule. The polyisocyanate compound serves as a crosslinking agent. Examples of the polyisocyanate compound include an aliphatic polyisocyanate, alicyclic polyisocyanate, aromatic-aliphatic polyisocyanate, aromatic polyisocyanate, and derivatives of these polyisocyanates.

Examples of the aliphatic polyisocyanate include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate 1,3-butylene diisocyanate, 2,4,4- or 2,2,4-trimethylhexamethylene diisocyanate, and 2,6-diisocyanatomethylcaproate, and aliphatic triisocyanates such as lysine ester triisocyanate, 1,4,8-triisocyanatooctane, 1,6,11-triisocyanatoundecane, 1,8-diisocyanato-4-(isocyanatomethyl)octane, 1,3,6-triisocyanatohexane, and 2,5,7-trimethyl-1,8-diisocyanato-5-(isocyanatomethyl)octane.

Examples of the alicyclic polyisocyanate include an alicyclic diisocyanate and alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane.

Examples of the aromatic-aliphatic polyisocyanate include an aromatic-aliphatic diisocyanate and aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene.

Examples of the aromatic polyisocyanates include an aromatic diisocyanate, aromatic triisocyanate, and aromatic tetraisocyanate. Specific examples of aromatic polyisocyanates include m-phenylenediisocyanate, p-phenylenediisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylenediisocyanate or a mixture thereof, triphenylmethane-4,4',4"-triisocyanate, and 4,4'-diphenylmethane-2,2',5,5'-tetraisocyanate.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in an aqueous solution and can be used in the same aqueous solution as the dispersion.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include a phenol-based compound, lactam-based compound, aliphatic alcohol-based compound, and oxime-based compound. The polyisocyanate compounds can be used singly or in combination of two or more thereof.

The epoxy compound is a compound having an epoxy group. Examples of the epoxy compound include an epoxy compound having a polyoxyalkylene group, for example, a polyglycerol polyglycidyl ether and polypropylene glycol diglycidyl ether; and sorbitol polyglycidyl ether.
The chloromethyl group-containing compound is a compound having a chloromethyl group. Examples of the chloromethyl group-containing compound include chloromethyl polystyrene.
The carboxyl group-containing compound is a compound having a carboxyl group. Examples of the carboxyl group-containing compound include (poly)acrylic acid, and (poly)methacrylic acid.
Specific examples of the ketone group-containing compound include (poly)diacetone acrylamide, and diacetone alcohol.
Specific examples of the hydrazide compound include hydrazine, carbohydrazide, and adipic acid hydrazide.
Specific examples of the melamine compound include a melamine resin, and methyl etherified melamine resin.

[Other components]

The dispersion may include other components in addition to those listed above. Generally, the other components are added after production of the fluorine-containing polymer. Examples of the other components include fluorine-free, water- and/or oil-repellent compounds.

(Fluorine-free, water- and/or oil-repellent compounds)

The dispersion may include a water- and/or oil-repellent compound that does not include a fluorine atom (fluorine-free, water- and/or oil-repellent compound).
The fluorine-free, water- and/or oil-repellent compound may be a fluorine-free acrylate polymer, saturated or unsaturated hydrocarbon compound, or silicone-based compound.
The fluorine-free acrylate polymer is a homopolymer composed of a single type of fluorine-free acrylate monomer, or a copolymer composed of at least two types of fluorine-free acrylate monomers, or a copolymer composed of at least one type of fluorine-free acrylate monomer and at least one type of other fluorine-free monomer (ethylenically unsaturated compound, for example, ethylene and a vinylbased monomer).
The fluorine-free acrylate monomer for the fluorine-free acrylate polymer is a compound represented by the formula:

$$CH_2=CA-T$$

wherein A is a hydrogen atom, a methyl group, or a halogen atom other than a fluorine atom (for example, a chlorine atom, a bromine atom, or an iodine atom), and T is a hydrogen atom, a chain or cyclic hydrocarbon group having 1 to 30 carbon atoms, or a chain or cyclic organic group having an ester bond and having 1 to 31 carbon atoms.
Examples of the chain or cyclic hydrocarbon group having 1 to 30 carbon atoms include a linear or branched aliphatic hydrocarbon group having 1 to 30 carbon atoms, cycloaliphatic group having 4 to 30 carbon atoms, aromatic hydrocarbon group having 6 to 30 carbon atoms, and aromatic-aliphatic hydrocarbon group having 7 to 30 carbon atoms.
Examples of the chain or cyclic organic group having an ester bond and having 1 to 31 carbon atoms include - C(=O)-O-Q and -O-C(=O)-Q, where Q is a linear or branched aliphatic hydrocarbon group having 1 to 30 carbon atoms, cycloaliphatic group having 4 to 30 carbon atoms, aromatic hydrocarbon group having 6 to 30 carbon atoms, or aromatic-aliphatic hydrocarbon group having 7 to 30 carbon atoms.
Examples of the fluorine-free acrylate monomer include alkyl (meth)acrylate, polyethylene glycol (meth)acrylate, polypropylene glycol (meth)acrylate, methoxy polyethylene glycol (meth)acrylate, and methoxy polypropylene glycol (meth)acrylate.
The fluorine-free acrylate monomer is preferably an alkyl (meth)acrylate. The number of carbon atoms in the alkyl group may be 1 to 30, for example, 6 to 30 (for example, 10 to 30). Specific examples of the fluorine-free acrylate monomer include lauryl (meth)acrylate, stearyl (meth)acrylate and behenyl (meth)acrylate.
The fluorine-free acrylate polymer can be produced by the same polymerization method as for the fluorine-containing polymer.
The saturated or unsaturated hydrocarbon-based compound is preferably a saturated hydrocarbon. The saturated or unsaturated hydrocarbon-based compound may have 15 or more carbon atoms, preferably 20 to 300 carbon atoms, for example, 25 to 100 carbon atoms. Specific examples of the saturated or unsaturated hydrocarbon-based compound include paraffin.
The silicone-based compound is generally used as a surface-treating agent (for example, a water repellent agent). The silicone-based compound is preferably a compound that exhibits water- and/or oil-repellency.

[Amount of each component]

(Amount of fluorine-containing polymer)

The amount of fluorine-containing polymer (solid content) may be about 0.01 to 60% by weight, preferably about 0.1 to 40% by weight, and more preferably about 5 to 35% by weight, relative to the dispersion. For example, in storage, the fluorine-containing polymer having a high concentration may be stored, and when used, it may be diluted to an arbitrary concentration by adding a liquid medium as needed, and then used. Since the product stability is improved, a product having a high concentration, which conventionally had a problem with supply in terms of the stability, can be supplied.

(Amount of unreacted chloride monomer)

The concentration of the unreacted chloride monomer in the dispersion may be 2.0 ppm or less, 1.5 ppm or less, 1.0 ppm or less, 0.8 ppm or less, 0.5 ppm or less, 0.3 ppm or less, or 0.1 ppm or less.

(Amount of liquid medium)

The amount of the liquid medium may be 30 to 99.9% by weight and particularly 50 to 99% by weight, relative to the dispersion.

(Amount of surfactant)

In the present disclosure, the dispersion of the fluorine-containing polymer, in particular an aqueous dispersion thereof can be formed even when using no surfactant. The amount of the surfactant may be 0.1 to 50 parts by weight, for example, 1 to 30 parts by weight, relative to 100 parts by weight of the fluorine-containing polymer (or total amount of monomers).

(Amount of curing agent)

The amount of the curing agent may be 100 parts by weight or less, for example, 0.01 to 30 parts by weight, relative to 100 parts by weight of the fluorine-containing polymer.

(Amount of other component)

The amount of the fluorine-free, water- and/or oil-repellent compound may be 500 parts by weight or less, for example, 5 to 200 parts by weight and particularly 5 to 100 parts by weight, relative to 100 parts by weight of the fluorine-containing polymer.

<Method for producing dispersion>

The method for producing the dispersion in the present disclosure comprises

(i) copolymerizing a fluorine-containing monomer (a) comprising a fluoroalkyl group and having a Q value of 2.0 or more in a Q-e scheme, and a chloride monomer (b) that is at least one selected from vinyl chloride and vinylidene chloride in a liquid medium to obtain a polymerization solution comprising a fluorine-containing polymer, and
(ii) reducing a concentration of the unreacted chloride monomer (b) in the polymerization solution obtained to 2.0 ppm or less.

[Step of obtaining a polymerization solution including a fluorine-containing polymer (i)]

The fluorine-containing polymer in the present disclosure can be produced by any of the usual polymerization methods, and conditions of the polymerization reaction can also be selected as desired. Such polymerization methods include solution polymerization, suspension polymerization, and emulsion polymerization.

In solution polymerization, a method is employed that includes dissolving a monomer in an organic solvent in the presence of a polymerization initiator, followed by nitrogen purge, and then heating and stirring the mixture at 30 to 120°C for 30 minutes to 48 hours, for example, 3 to 24 hours. Examples of the polymerization initiator include azobisisobutyronitrile, benzoyl peroxide, di-t-butyl peroxide, lauryl peroxide, cumene hydroperoxide, t-butyl peroxypivalate,

and diisopropyl peroxydicarbonate. The polymerization initiator is used in an amount in the range of 0.01 to 20 parts by weight, for example, 0.01 to 10 parts by weight, relative to 100 parts by weight of the monomer.

The organic solvent may be a solvent that is inactive to monomers and used for dissolving them, and for example, it may be esters (for example, esters having 2 to 30 carbon atoms, specifically ethyl acetate and butyl acetate), ketones (for example, ketones having 2 to 30 carbon atoms, specifically methyl ethyl ketone and diisobutyl ketone), alcohols (for example, alcohols having 1 to 30 carbon atoms, specifically isopropyl alcohol). Specific examples of the organic solvent include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane, trichlorotrifluoroethane, etc. The organic solvent is used in an amount in the range of 10 to 2,000 parts by weight, for example, 50 to 1,000 parts by weight, relative to 100 parts by weight of the total amount of the monomers.

In emulsion polymerization, a method is employed that includes emulsifying a monomer in water in the presence of a polymerization initiator and emulsifier, followed by nitrogen purge, and then polymerizing the monomer under stirring at 50 to 80°C for 30 minutes to 48 hours, for example, 3 to 24 hours. Examples of the polymerization initiator to be used include water-soluble initiators such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine dihydrochloride, azobisisobutyronitrile, sodium peroxide, potassium persulfate, and ammonium persulfate, and oilsoluble initiators such as azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in an amount in the range of 0.01 to 10 parts by weight relative to 100 parts by weight of monomers.

In order to obtain a polymer dispersion excellent in the stability when left stand, it is desirable that the monomer be micronized into fine particles in water by using an emulsification apparatus that can impart powerful pulverizing energy, such as a high-pressure homogenizer or ultrasonic homogenizer, and then polymerized. Various anionic, cationic, or nonionic emulsifiers can be used as the emulsifier, and they are used in an amount in the range of 0.5 to 20 parts by weight relative to 100 parts by weight of monomers. The anionic and/or nonionic and/or cationic emulsifiers are preferably used. When the monomers do not completely compatibilize with each other, a compatibilizer that compatibilizes these monomers sufficiently, such as a water-soluble organic solvent or a monomer with low molecular weight, is preferably added. The addition of the compatibilizer enables improvement in emulsifiability and copolymerizability.

Examples of the water-soluble organic solvent include acetone, methyl ethyl ketone, ethyl acetate, propylene glycol, dipropylene glycol monomethyl ether, dipropylene glycol, tripropylene glycol, and ethanol, and they may be used in an amount in the range of 1 to 50 parts by weight, for example, 10 to 40 parts by weight, relative to 100 parts by weight of water. Examples of the monomer with low molecular weight include methyl methacrylate, glycidyl methacrylate, and 2,2,2-trifluoroethyl methacrylate, and they may be used in an amount in the range of 1 to 50 parts by weight, for example, 10 to 40 parts by weight, relative to 100 parts by weight of the total amount of the monomers.

A chain transfer agent may be used in the polymerization. The molecular weight of the polymer can be changed according to the amount of the chain transfer agent used. Examples of the chain transfer agent include mercaptan group-containing compounds such as lauryl mercaptan, thioglycol, and thioglycerol (in particular alkyl mercaptan (for example, having 1 to 30 carbon atoms)), and inorganic salts such as sodium hypophosphite and sodium hydrogen sulfite. The amount of the chain transfer agent used may be in the range of 0.01 to 10 part by weight, for example, 0.1 to 5 parts by weight, relative to 100 parts by weight of the total amount of the monomers.

The fluorine-containing polymer is preferably produced by emulsion polymerization or solution polymerization.

After the production of the fluorine-containing polymer by polymerization, water (or an aqueous medium) is preferably added to disperse the fluorine-containing polymer in water.

Water (or aqueous medium) may be added after the fluorine-containing polymer was produced by the polymerization. For example, after the fluorine-containing polymer was produced by polymerizing monomers in the presence of an organic solvent, water may be added to the polymer mixture, and the organic solvent may be distilled off to disperse the fluorine-containing polymer in water. The organic solvent may not be distilled off. The surfactant may be added before or after polymerization, or may not be added. An aqueous dispersion can be obtained without the addition of the surfactant. The curing agent may be added before or after polymerization; however, it is preferably added after polymerization. Other components may be added before or after polymerization, or may not be added.

[Chloride monomer removal step (ii)]

Examples of a method for removing unreacted vinyl chloride or vinylidene chloride from the polymerization solution after a polymerization reaction, include distillation under a reduced pressure, distillation by stirring under normal pressure and heating, distillation by bubbling of air, nitrogen or steam under heating or non-heating (for example, at 100 cc/min or more, 200 cc/min or more, 300 cc/min or more, or 400 cc/min or more, for 3 hours or longer, 6 hours or longer,

12 hours or longer, or 18 hours or longer), and a method involving utilizing a packed column, spin coater, cylindrical volatilizing equipment, etc. The temperature, time, air flow intensity, or the like upon the removal step can be appropriately changed. Chloride monomer (b) may be removed such that part of the liquid medium remains in the polymerization solution.

<Method for producing treated object>

[Treatment method]

The dispersion of the present disclosure can be applied to an object to be treated as a surface-treating agent by conventional and known methods. Usually, a method is employed that includes dispersing and diluting the dispersion in an organic solvent or water, and adhering it to a front side of the object to be treated by a known method such as dip coating, spray coating, or foam coating, followed by drying. It may also be applied together with an appropriate crosslinking agent and cured, if necessary. Furthermore, an insect repellent, softening agent, antibacterial agent, flame retarder, antistatic agent, paint fixative, wrinkle-resistant agent, or the like can be added to the dispersion of the present disclosure and used in combination therewith. The concentration of the polymer in the treatment liquid to be brought in contact with a textile product may be 0.01 to 10% by weight (particularly in the case of dip coating), for example, 0.05 to 10% by weight.

[Object to be treated]

Examples of the object to be treated with the surface-treating agent of the present disclosure (for example, the water repellent agent, oil repellent agent, water- and oil-repellent agent) include textile products, stone, filters (for example, electrostatic filters), dust masks, components of fuel cells (for example, gas diffusion electrodes and gas diffusion supports), glass, paper, wood, leather, fur, asbestos, brick, cement, metals and oxides, ceramic products, plastics, painted surfaces, and plasters. Examples of the textile products include various products, including animal and vegetable natural fibers such as cotton, hemp, wool, and silk; synthetic fibers such as polyamide, polyester, polyvinyl alcohol, polyacrylonitrile, polyvinyl chloride, and polypropylene; semi-synthetic fibers such as rayon and acetate; inorganic fibers such as glass fiber, carbon fiber, and asbestos fiber; or mixed fibers thereof.

The textile product may be in any form of fibers, fabrics, etc.

The dispersion of the present disclosure can also be used as an internal or external mold release agent.

The polymer can be applied to the textile products by any of the methods known for treating textile products (for example, fabrics) with liquids. The textile product may be immersed in a solution, or the solution may be adhered to or sprayed on the textile product. The treated textile product is dried and subjected to curing, preferably by heating, in order to develop water- and oil-repellency. The heating temperature may be, for example, 100°C to 200°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes.

Alternatively, the polymer may be applied to the textile product by a cleaning method, for example, in laundry application or dry cleaning methods.

The textile products to be treated are typically fabrics, including woven textiles (woven fabrics), knitted textiles (knitted fabrics) and nonwoven fabrics, fabrics in clothing form and carpets. The textile products may also be fibers or yarns or intermediate textile products (for example, sliver or coarse yarn). The dispersion of the present disclosure is particularly effective in rendering textile products (for example, synthetic fibers) water- and/or oil-repellent.

Fibers constituting the textile product may be natural, synthetic, semi-synthetic, regenerated or inorganic fibers. Fibers may be used singly or in combination of two or more thereof.

Examples of the natural fibers include cellulosic fibers such as cotton, flax, and wood pulp, chitin, chitosan, wool, and silk. Specific examples of the wood pulp include mechanical pulp such as ground wood pulp (GP), pressurized ground wood pulp (PGW), and thermomechanical pulp (TMP), chemical pulp such as high-yield softwood unbleached kraft pulp (HNKP; N material), softwood bleached kraft pulp (NBKP; N material, NB material), hardwood unbleached kraft pulp (LUKP; L material), hardwood bleached kraft pulp (LBKP, L material), waste paper pulp such as deinking pulp (DIP) and waste pulp (WP), and semi-chemical pulp (CP).

Examples of the synthetic fibers include polyesters such as polyethylene terephthalate, polybutylene terephthalate, polytrimethylene terephthalate, and copolymerized polyesters; polyolefins such as linear low density polyethylene, low density polyethylene, high density polyethylene, and polypropylene; polyamides such as nylon 6, nylon 66, nylon 610, and nylon 46; and acrylic fibers such as polyacrylonitrile; polyvinyl alcohol, polyurethane, and polyvinyl chloride.

Examples of the semi-synthetic fibers include acetate and triacetate.

Examples of the regenerated fibers include rayon, cupra, polynosic rayon, lyocell, and tencel.

Examples of the inorganic fibers include glass fiber and carbon fiber.

Alternatively, the textile product may be leather. In order to render the leather water- and oil-repellent, the polymeric product in the form of an aqueous solution or aqueous emulsion may be applied to the leather at various stages of leather processing, for example, during a wet processing of the leather or during a finishing of the leather.

Alternatively, the textile product may be paper. The polymeric product may be applied to paper that has been produced, or may be applied at various stages of papermaking, for example, during drying the paper.

The term "treatment" means applying the dispersion to an object to be treated by dipping, spraying, coating, etc. The treatment allows the polymer as an active ingredient of the dispersion to penetrate inside of the object to be treated and/or to adhere to a front side of the object to be treated.

Examples

Examples of the present disclosure will be specifically illustrated; however, Examples do not restrict the present disclosure. Hereinbelow, "%" means % by weight unless otherwise specified.

The meanings of the abbreviations are as described in Table 1.

[Table 1]

| Abbreviations | Compound name and molecular weight |
|---|---|
| C8FA | $CF_3CF_2$-$(CF_2CF_2)_n$-$CH_2CH_2OCOCH$=$CH_2$ (n=3) |
| C8FMA | $CF_3CF_2$-$(CF_2CF_2)_n$-$CH_2CH_2OCOC(CH_3)$=$CH_2$ (n=3) |
| C6FA | $CF_3CF_2$-$(CF_2CF_2)_n$-$CH_2CH_2OCOCH$=$CH_2$ (n=2) |
| C6FMA | $CF_3CF_2$-$(CF_2CF_2)_n$-$CH_2CH_2OCOC(CH_3)$=$CH_2$ (n=2) |
| C6FClA | $CF_3CF_2$-$(CF_2CF_2)_n$-$CH_2CH_2OCOCCl$=$CH_2$ (n=2) |
| C4FA | $CF_3CF_2$-$(CF_2CF_2)_n$-$CH_2CH_2OCOCH$=$CH_2$ (n=1) |
| C4FMA | $CF_3CF_2$-$(CF_2CF_2)_n$-$CH_2CH_2OCOC(CH_3)$=$CH_2$ (n=1) |
| C4FClA | $CF_3CF_2$-$(CF_2CF_2)_n$-$CH_2CH_2OCOCCl$=$CH_2$ (n=1) |
| VCM | Vinyl chloride |
| StA | Stearyl acrylate |
| GLM | Glycidyl methacrylate |

[Calculation of Q-e value]

The reactivity ratios ($r_1$ and $r_2$) of the fluorine-containing monomer for styrene were determined as follows.

Copolymerization was carried out as follows. To a four-necked flask of 100 ml were added ethyl acetate (25 g), C8FA and styrene so that a feed ratio of the monomers was 1/9 to 9/1 (total number of moles was 0.04 moles). The mixture was heated to 60°C under a nitrogen atmosphere while stirring. Next, 2,2'-bis 2,4-hydroxybutyrate was added as a polymerization initiator (0.5 mol% relative to the feed monomers). The monomer conversion ratio was adjusted to 10% or less in the copolymerization.

For purification of the copolymer, a 10-fold volume of methanol was added to the polymer solution, and the precipitate formed was separated by centrifugation. It was washed again with the same volume of methanol, and the precipitate formed was separated in the same manner. The product was filtered and dried at 130°C for 1h. The copolymer composition ratio was determined by analysis for F in the copolymer produced.

Table 2 shows the amounts of the monomers fed, fluorine content of the copolymer, FA mol% and styrene mol% in the copolymer, and Table 2 shows f=d[M1]/d[M2], F=[M1]/[M2], $F^2$/f, and F(f-1)/f, which are calculated therefrom.

[Table 2]

| Entry. | **1** | **2** | **3** | **4** | **5** | **6** | **7** | **8** | **9** |
|---|---|---|---|---|---|---|---|---|---|
| Feed of C8FA (g) | 2.07 | 4.14 | 6.29 | 8.29 | 10.36 | 12.43 | 14.5 | 16.58 | 18.65 |
| Feed of Styrene (g) | 3.74 | 3.33 | 2.95 | 2.5 | 2.09 | 1.67 | 1.26 | 0.84 | 0.42 |
| Total feed of Monomer (g) | 5.81 | 7.47 | 9.24 | 10.79 | 12.45 | 14.1 | 15.76 | 17.42 | 19.07 |
| Copolymer (g) | 0.27 | 0.52 | 0.35 | 0.83 | 0.4 | 0.64 | 0.7 | 0.05 | 2.09 |
| Polymerization ratio(%) | 4.65 | 6.96 | 3.79 | 7.69 | 3.21 | 4.54 | 4.44 | 0.29 | 10.96 |
| Fluorine content of copolymer(%) | 26.69 | 36.20 | 41.18 | 43.99 | 46.95 | 49.94 | 51.38 | 53.74 | 56.06 |
| C8FA in copolymer(mol%) | 13.06 | 21.75 | 28.08 | 32.47 | 37.96 | 44.68 | 48.45 | 55.60 | 64.13 |
| Styrene in copolymer(mol%) | 86.94 | 78.25 | 71.92 | 67.53 | 62.04 | 55.32 | 51.55 | 44.40 | 35.87 |
| f=d[Ml]/d[M2] | 0.15 | 0.28 | 0.39 | 0.48 | 0.61 | 0.81 | 0.94 | 1.25 | 1.79 |
| F=[M1]/[M2] | 0.11 | 0.25 | 0.43 | 0.67 | 1.00 | 1.49 | 2.31 | 3.96 | 8.92 |
| $F^2/f$ | 0.08 | 0.22 | 0.47 | 0.92 | 1.62 | 2.77 | 5.68 | 12.54 | 44.45 |
| F(f-1)/f | -0.63 | -0.65 | -0.67 | -0.72 | -0.63 | -0.36 | -0.15 | 0.80 | 3.93 |
| $\Delta$f2 | 0.0049 | 0.00042 | 0.00053 | 0.0076 | 0.0039 | 0.00048 | 0.00025 | 0.0016 | 0.000001 |

By using a solver function in Excel manufactured by Microsoft Corp., the combination of $r_1$ and $r_2$ was determined so that

$$\sum_{entry9}^{entry1} \Delta f^2$$

became a minimum value, resulting in $r_1$=0.10 and $r_2$=0.69. These values of $r_1$=0.10 and $r_2$=0.69 as well as $Q_2$=1.0 and $e_2$=-0.8 of styrene were substituted into Equation [5] and Equation [6] to obtain $Q_1$=0.40 and $e_1$=0.82. In the same manner, the reactivity ratios of the various FA monomers for styrene ($r_1$, $r_2$) as well as Q and e values were calculated. The results are shown in Table 3.

[Table 3]

| Entry | Monomer | X | n | $r_1$ | $r_2$ | *Q value* | *e value* |
|---|---|---|---|---|---|---|---|
| 1 | C8FA | H | 8 | 0.10 | 0.69 | 0.40 | 0.82 |
| 2 | C8FMA | $CH_3$ | 8 | 0.47 | 0.46 | 0.81 | 0.44 |
| 3 | C6FA | H | 6 | 0.10 | 0.70 | 0.38 | 0.85 |
| 4 | C6FMA | $CH_3$ | 6 | 0.34 | 0.41 | 0.79 | 0.60 |
| 5 | C6FClA | Cl | 6 | 0.40 | 0.08 | 290 | 1.06 |
| 6 | C4FA | H | 4 | 0.13 | 0.67 | 0.42 | 0.77 |
| 7 | C4FMA | $CH_3$ | 4 | 0.30 | 0.47 | 0.70 | 0.60 |
| 8 | C4FClA | Cl | 4 | 0.19 | 0.07 | 273 | 1.28 |

[Production Example 1]

In a 500-ml plastic container were added 50 g of a fluoroalkyl acrylate (C6FA), 15 g of stearyl acrylate, 3 g of glycidyl methacrylate, 20 g of a water-soluble glycol solvent, 294 g of pure water, 2 g of a sorbitan fatty acid ester, 2 g of a cationic emulsifier, and 6 g of a polyoxyethylene alkyl ether, and the mixture was heated to 60°C, and then stirred with a homo-mixer at 2,000 rpm for 1 minute, followed by emulsifying and dispersing by ultrasonic waves for 15 minutes. The emulsified dispersion was transferred to a 500-ml autoclave, followed by nitrogen purge for 15 minutes, and then 0.2 g of lauryl mercaptan and 32 g of vinyl chloride were added thereto. Furthermore, 1 g of an azo group-containing water-soluble initiator was added, the temperature of the mixture was raised to 60°C, and the mixture was subjected to a reaction for 4 hours to obtain an aqueous dispersion of the polymer. The monomer conversion ratio determined by gas chromatography was 99.0 to 99.8%. The dispersion was further diluted with pure water to prepare a water dispersion with a solid content of 30% by weight. Subsequently the dispersion was heated to 60°C and bubbled with a nitrogen gas at 500 cc/min for 24 hours while stirring to remove unreacted vinyl chloride monomers, thereby obtaining a water dispersion including the fluorine-containing polymer. Gas chromatogram analysis demonstrated that no residual vinyl chloride monomer was detected (detection limit: 1 ppm). Next, a vinyl chloride monomer was added to 6 ppm, to obtain a water dispersion including a fluorine-containing polymer with vinyl chloride concentration of 6 ppm. The vinyl chloride concentration was confirmed by gas chromatogram analysis.

[Production Examples 2 to 10]

A water dispersion including a fluorine-containing polymer with a predetermined vinyl chloride concentration was obtained in the same manner as in Production Example 1, except that the amounts of monomers fed and the amount of vinyl chloride monomer subsequently added were as shown in Table 6.

[Example 1]

33.3 g of the water dispersion prepared in Production Example 3, which included the fluorine-containing polymer and had a solid content of 30% by weight, was diluted with tap water to prepare 1,000 g of a test solution with a solid content of 1.0%. Polyester fabric and nylon fabric were immersed in the test solution and then squeezed with a mangle.

Each fabric was dried and cured through a pin tenter at 160°C for 1 minute.

The fabrics thus treated were subjected to a water-repellency test and an oil-repellency test by the spray method according to JIS L-1092, the Bundesmann test, and a stability evaluation test. The results are shown in Table 6.

[Example 2]

A treatment liquid including a predetermined amount of vinyl chloride monomer was prepared and was then evaluated in the same manner as in Example 1, except for using the water dispersion prepared in Production Example 4, which included the fluorine-containing polymer and had a solid content of 30%. The results are shown in Table 6.

[Comparative Examples 1 to 8]

Each water dispersion prepared in Production Examples 1, 2, and 5 to 10, which included a fluorine-containing polymer and had a solid content of 30%, was treated and evaluated in the same manner as in Example 1. The results are shown in Table 6.

[Water-repellency evaluation by spray method]

The treated test fabrics were stored in a constant temperature and humidity chamber at a temperature of 21°C and a humidity of 65% for 4 hours or longer, and then subjected to the following evaluations. Each of the test fabrics described above was evaluated for water-repellency by the spray method according to the JIS-L-1092 (AATCC-22). The water-repellency was evaluated according to the criteria shown in Table 4. The higher the score, the more favorable the water-repellency. The results are shown in Table 6.

[Table 4]

| | |
|---|---|
| 100 | No wet or water droplets adhered was observed on the front side. |
| 90 | No wet but small water droplets adhered was observed on the front side. |
| 80 | Wet in the form of separate small water droplets was observed on the front side. |
| 70 | Wet was observed on half of the front surface and the separate small wet penetrated the fabric. |
| 50 | Wet was observed on the whole front side. |
| 0 | Wet was observed on the whole front side and the whole back side. |

[Oil-repellency evaluation]

The treated test fabrics were stored in a constant temperature and humidity chamber at a temperature of 21°C and a humidity of 65% for 4 hours or longer, and then subjected to the following evaluations.

0.05 ml of the test solution (Table 4) was gently dropped onto each test fabric and left for 30 seconds. If a droplet remains on the test fabric, the test solution is evaluated as acceptable. The highest score of the accepted test solutions was recorded as the oil-repellency. Evaluation was made on a 9-point scale of Fail, 1, 2, 3, 4, 5, 6, 7, and 8 from a poor level to a favorable level of the oil-repellency. The results are shown in Table 6.

[Table 5]

| Oil-repellency test | | |
|---|---|---|
| Score | Test solution | Surface tension (dyne/cm, 25°C) |
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | Mixed solution of n-hexadecane 35/Nujor 65 | 29.6 |
| 1 | n-Nujor | 31.2 |

(continued)

| Oil-repellency test | | |
|---|---|---|
| Score | Test solution | Surface tension (dyne/cm, 25°C) |
| Fail | Less than 1 | - |

[Bundesmann test]

On each test fabric described above, rainfall was allowed to occur under the conditions of a rainfall rate of 80 cc/min, a temperature of the rainfall water of 20°C, and a rainfall duration of 1 minute according to the Bundesmann test described in the (C) method according to JIS-L-1092, and the amount of water leakage (mL) was measured. The amount of water leakage refers to the amount of water (ml) that passed through the front side of the fabric during the Bundesmann test. The results are shown in Table 6.

[Product stability test]

After having left the dispersion with a solid content adjusted to 30% by weight at 50°C for 2 weeks, the condition of the dispersion is visually observed and then evaluated according to the following criteria.

◎: No change in appearance
○: No sedimentation, but very small amount of precipitates on dispersion surface.
△: Slight sedimentation and very small amount of precipitates on dispersion surface
×: Separation or sedimentation

[Table 6]

| | | Com.Ex. 1 | Com.Ex. 2 | Ex. 1 | Ex.2 | Com.Ex. 3 | Com.Ex. 4 | Com.Ex. 5 | Com.Ex. 6 | Com.Ex. 7 | Com.Ex.8 |
|---|---|---|---|---|---|---|---|---|---|---|---|
| | Q value | Pro.Ex. 1 | Pro.Ex. 2 | Pro.Ex. 3 | Pro.Ex. 4 | Pro.Ex. 5 | Pro.Ex. 6 | Pro.Ex. 7 | Pro.Ex. 8 | Pro.Ex. 9 | Pro.Ex.1 0 |
| C6FCLA | 2.90 | | 50 | 50 | 58 | 58 | 58 | | | | |
| C6FMA | 0.79 | | | | | | | 58 | 58 | | |
| C6FA | 0.38 | 50 | | | | | | | | 58 | 58 |
| VCM | | 32 | 32 | 32 | 20 | 20 | 20 | 20 | 20 | 20 | 20 |
| StA | | 15 | 15 | 15 | 20 | 20 | 20 | 20 | 20 | 20 | 20 |
| GLM | | 3 | 3 | 3 | 2 | 2 | 2 | 2 | 2 | 2 | 2 |
| total | | 100 | 100 | 100 | 100 | 100 | 100 | 100 | 100 | 100 | 100 |
| Ratio of vinyl chloride/polymer | | 32% | 32 | 32 | 20% | 20% | 20% | 20% | 20% | 20% | 20% |
| Ratio of vinyl chloride/ fluorine-containing monomer | | 64% | 64% | 64% | 34% | 34% | 34% | 34% | 34% | 34% | 34% |
| Vinyl chloride concentration | | 6ppm | 6ppm | <lppm | <lppm | 6ppm | 10ppm | <lppm | 10ppm | <lppm | 10ppm |
| Water-repellency | | 100 | 100 | 100 | 100 | 100 | 100 | 95 | 95 | 90 | 90 |
| Oil-repellency | | 5 | 6 | 6 | 6 | 6 | 6 | 4 | 4 | 5 | 5 |
| Bundesmann (after 10 min) | | 90 | 95 | 95 | 100 | 100 | 100 | 90 | 90 | 80 | 80 |
| Product stability (amount of sedimentation after heating for 1 week) | | △ | △-× | ◎- ○ | ◎ | △ | △-× | ○ | △ | ○ | △ |

The embodiments have been described above; however, it will be understood that various changes can be made in the forms and details without departing from the gist and scope of the claims.

Industrial Applicability

The dispersion of the present disclosure can be utilized to impart water- and/or oil-repellency to various products.

## Claims

1. A dispersion comprising a fluorine-containing polymer and a liquid medium, wherein

   the fluorine-containing polymer comprises
   a repeating unit derived from a fluorine-containing monomer (a) having a Q value of 2.0 or more and comprising a fluoroalkyl group, and
   a repeating unit derived from a chloride monomer (b) that is at least one selected from vinyl chloride and vinylidene chloride, and
   the dispersion has a concentration of the unreacted chloride monomer (b) of 2.0 ppm or less.

2. The dispersion according to claim 1, wherein
   the fluorine-containing monomer (a) is a compound represented by a formula:

   $CH_2=C(-X)-C(=O)-Y-Z-Rf$

   wherein X is a halogen atom;

   Y is -O- or -NH-;
   Z is a direct bond or a divalent organic group; and
   Rf is a fluoroalkyl group having 1 to 20 carbon atoms.

3. The dispersion according to claim 2, wherein X is a chlorine atom.

4. The dispersion according to claim 2 or 3, wherein Rf is a perfluoroalkyl group having 3 to 6 carbon atoms.

5. The dispersion according to any one of claims 1 to 4, wherein an amount of the repeating unit derived from the chloride monomer (b) is less than 25% by weight relative to the fluorine-containing polymer.

6. The dispersion according to any one of claims 1 to 5, wherein the fluorine-containing polymer further comprises a repeating unit derived from a hydrocarbon group-containing monomer (c) represented by a formula:

   $CH_2=CA^{21}-C(=O)-O-A^{22}$ (c)

   wherein $A^{21}$ is a hydrogen atom, a monovalent organic group, or a halogen atom, and $A^{22}$ is a hydrocarbon group having 2 to 40 carbon atoms.

7. The dispersion according to claim 6, wherein the fluorine-containing polymer comprises
   a repeating unit derived from a long-chain hydrocarbon group-containing monomer (c1) in which $A^{22}$ in formula (c) is an acyclic aliphatic hydrocarbon group having 12 to 30 carbon atoms.

8. The dispersion according to claim 6 or 7, wherein a total amount of the repeating unit derived from the fluorine-containing monomer (a), the repeating unit derived from the chloride monomer (b), and the repeating unit derived from the hydrocarbon group-containing monomer (c) is 90% by weight or more relative to the fluorine-containing polymer.

9. The dispersion according to any one of claims 1 to 8, wherein the fluorine-containing polymer further comprises a repeating unit derived from a crosslinkable monomer (d) having at least two selected from the group consisting of a reactive group and an olefinic carbon-carbon double bond.

10. The dispersion according to claim 9, wherein an amount of the repeating unit derived from the fluorine-containing monomer (a) is 25% by weight or more relative to the fluorine-containing polymer, and an amount of the repeating unit derived from the crosslinkable monomer (d) is 10% by weight or less relative to the fluorine-containing polymer.

11. The dispersion according to any one of claims 1 to 10, wherein the concentration of the unreacted chloride monomer (b) is 1.0 ppm or less.

12. The dispersion according to any one of claims 1 to 11, wherein the liquid medium comprises at least 30% by weight or more of water.

13. A method for producing a dispersion, comprising:

(i) copolymerizing a fluorine-containing monomer (a) comprising a fluoroalkyl group and having a Q value of 2.0 or more in a Q-e scheme, and a chloride monomer (b) that is at least one selected from vinyl chloride and vinylidene chloride in a liquid medium to obtain a polymerization solution comprising a fluorine-containing polymer, and
(ii) reducing a concentration of the unreacted chloride monomer (b) in the polymerization solution obtained to 2.0 ppm or less.

14. A method for producing a treated object, comprising applying the dispersion according to any of claims 1 to 12 to a substrate.

**INTERNATIONAL SEARCH REPORT**

International application No.
PCT/JP2021/008794

A. CLASSIFICATION OF SUBJECT MATTER
C08F 220/22(2006.01)i; C08K 5/02(2006.01)i; C08L 27/04(2006.01)i; C08L 33/04(2006.01)i; C08L 33/16(2006.01)i; D06M 15/277(2006.01)i
FI: C08L33/16; D06M15/277; C08L27/04; C08L33/04; C08K5/02; C08F220/22
According to International Patent Classification (IPC) or to both national classification and IPC

B. FIELDS SEARCHED
Minimum documentation searched (classification system followed by classification symbols)
C08F220/22; C08K5/02; C08L27/04; C08L33/04; C08L33/16; D06M15/277

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 2013-511574 A (DAIKIN INDUSTRIES, LTD.) 04 April 2013 (2013-04-04) claims, paragraphs [0136]-[0158], polymerization example 1, test example 4 | 1-14 |
| A | WO 2017/145918 A1 (DAIKIN INDUSTRIES, LTD.) 31 August 2017 (2017-08-31) claims, examples | 1-14 |
| A | WO 2018/084132 A1 (DAIKIN INDUSTRIES, LTD.) 11 May 2018 (2018-05-11) claims, examples | 1-14 |
| A | JP 2015-83619 A (DAIKIN INDUSTRIES, LTD.) 30 April 2015 (2015-04-30) claims, examples | 1-14 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
06 April 2021 (06.04.2021)

Date of mailing of the international search report
20 April 2021 (20.04.2021)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**
Information on patent family members

International application No.
PCT/JP2021/008794

| Patent Documents referred in the Report | Publication Date | Patent Family | Publication Date |
|---|---|---|---|
| JP 2013-511574 A | 04 Apr. 2013 | US 2012/0295503 A1 claims, paragraphs [0208]-[0230], polymerization example 1, test example 4<br>EP 2501850 A1<br>CN 102666971 A | |
| WO 2017/145918 A1 | 31 Aug. 2017 | KR 10-2018-0104044 A<br>CN 108699426 A | |
| WO 2018/084132 A1 | 11 May 2018 | US 2020/0055970 A1<br>EP 3536718 A1<br>CN 108017745 A<br>KR 10-2019-0053897 A | |
| JP 2015-83619 A | 30 Apr. 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H480218 A


### Non-patent literature cited in the description


- **J. BRANDRUP ; E. H. IMMERGUT ; E. A. GRULKE.** Polymer Handbook. John Wiley & Sons Inc, 1998
- **F. R. MAYO ; F. M. LEWIS.** *J. Am. Chem. Soc.,* 1944, vol. 66, 1594
- **M. FINEMAN ; S. D. ROSS.** *J. Polym. Sci.,* 1950, vol. 5, 259
- **P. W. TIDWELL ; G. A. MORTIMER.** *J. Polymer. Sci.,* 1965, vol. A3, 369
- **T. OTSU.** Progress in Polymer Science Japan. Kodansha Ltd, 1970, vol. 1, 4
- **T. ALFREY JR. ; C. C. PRICE.** *J. Polym. Sci.,* 1947, vol. 2, 101